Europäisches Patentamt

European Patent Office

Office européen des brevets

(19)

(11) Veröffentlichungsnummer: **0 238 827**
**A1**

(12) **EUROPÄISCHE PATENTANMELDUNG**

(21) Anmeldenummer: 87101919.6

(22) Anmeldetag: **11.02.87**

(51) Int. Cl.⁴: **A01D 34/44 , A01D 34/42**

(30) Priorität: **17.02.86 CH 617/86**

(43) Veröffentlichungstag der Anmeldung:
**30.09.87 Patentblatt 87/40**

(84) Benannte Vertragsstaaten:
**AT DE FR GB NL**

(71) Anmelder: **Klöckner-Humboldt-Deutz AG**
**Zweigniederlassung Fahr**

**D-7702 Gottmadingen(DE)**

(72) Erfinder: **von Bergen sen., Ernst**
**Im Roset**
**CH-8370 Sirnach(CH)**
Erfinder: **von Bergen jun., Ernst**
**Im Roset**
**CH-8370 Sirnach(CH)**

(54) **Mähvorrichtung.**

(57) Mähvorrichtung, gekennzeichnet durch wenigstens zwei in einer räumlich verstellbaren Dreipunktaufhängung (1) angeordnete, beim Mähen räumlich und zeitlich unterbrechungslos zusammenarbeitende Arbeitsmittel (2,3), nämlich einem ersten (2), das aus mindestens einer in der Aufhängung (1) drehbar gelagerten Welle (4) und an dieser (4) befindlichen sowie gegen diese (4) als auch gegeneinander alternierend gleich geneigten, an den von der Welle (4) am weitesten abstehenden Stellen (10) paarweise miteinander verbundenen, in zusammenhängender Anordnung an der Welle (4) befestigten, - scheibenförmigen Mähmessern (5) besteht, welche Teile (4,5) insgesamt das erste Arbeitsmittel (2) in Form einer Mähmesserwalze (2) bilden, das (2) zusammen mit wenigstens einem das jeweilige Mähgut scherenden und gleichzeitig fräsenden Mähmesserbalken (3) als zweitem Arbeitsmittel (3) zusammenwirkt, das (3) aus mindestens einem mit der Dreipunktaufhängung (1) fest verbundenen Träger (6) mit daran nebeneinander befestigten, fingerförmigen Mähmessern (7) besteht.

Fig. 1

EP 0 238 827 A1

## Mähvorrichtung

Die Erfindung betrifft eine Mähvorrichtung.

Seit längerer Zeit sind Mähvorrichtungen gebräuchlich, die mittels eines oszillierenden Fingerbalkens im Zusammenwirken mit einem relativ zu diesem feststehenden· Fingerbalken das jeweilige Mähgut zu gewinnen ermöglichen. Solche Balkenelemente, die aufgrund des Prinzipes des Scherenschnittes funktionieren, werden jetzt noch besonders bei schwächeren kleinen Mähapparaten verwendet. Der vorgenannte oszillierende Messerbalken führt demnach zwischen seinen beiden End-bzw. Ruhelagen jeweils eine zunehmend und anschliessend negativ beschleunigte Bewegung aus. Durch den dauernden Bewegungswechsel wird mit zunehmender Anzahl der hin-und her-Bewegungen des Messerbalkens zwischen seinen beiden Ruhelagen, also mit zunehmender Bewegungsfrequenz der Antrieb des Messerbalkens mechanisch zunehmend stärker belastet. Dadurch ergibt sich eine Begrenzung der mechanischen Leistung solcher Mähvorrichtungen mit der Folge einer Beschränkung deren Schnittflächenleistung. Im Vergleich mit modernen stärkeren Mähvorrichtungen kann mit einem Schnittverlust von etwa 60 % gerechnet werden, was aus dem vorgenannten Grunde durch Erhöhung der Drehzahl des Antriebes bzw. durch Erhöhung der Schwingfrequenz des Messerbalkens nicht wettzumachen ist. Müssen unterschiedliche Mähgutwiderstände bei unterschiedlicher Geschwindigkeit des Messerbalkens überwunden werden, führt dies bei zu hoher Beanspruchung des Mähapparates zu häufigem Hängenbleiben des Schnittgutes an den Zackenspitzen des feststehenden Fingerbalkens. In weiterer Folge kommt es dadurch zur Bildung von Schnittgutklumpen, was zur Verstopfung des aus Messerbalken und Zackenbalken bestehenden Systemes führt.

Um den Mähvorgang fortsetzen zu können, muss in umständlicher Weise die Verstopfung von Hand behoben und hiebei der Mähapparat zumindest kurz nach hinten gefahren werden. Gerät insbesondere im Moment der Bewegungsumkehr des Messerbalkens ein Fremdkörper zwischen Messer und Zacken des Balkens, so wird jener seitlich verschoben, gelangt dann zwischen die Spitzen der Messer und Zacken und wird dadurch das aus Messerbalken und Zackenbalken bestehende System blockiert. Beim Mähen von Feldern, die z.B. durch Maushaufen stark durchsetzt sind, kommt es zu einer starken . Beeinträchtigung der Schnittflächenleistung oder können solche Felder mit solchen Mähvorrichtungen überhaupt nicht gemäht werden.

Zur Vermeidung von vorbeschriebenen Verstopfungen sind Mähvorrichtungen mit zwei oszillierenden Messerbalken in Verwendung. Im Vergleich dieser Mähvorrichtungen mit den vorbeschriebenen werden bei dem letztgenannten Mähvorrichtungen die Messerbalken bzw. Messer durch gefederte Schwinghebel gegeneinander gedrückt. Solche Systeme müssen an sich aber auch vom Antrieb her sehr genau eingestellt werden, um Schäden möglichst zu vermeiden. Beim letztgenannten System mit ʼzwei oszillierenden Messerbalken treten von Prinzip her bereits grössere Reibungswiderstände auf, was einen grösseren Leistungsverlust verursacht. Ausserdem muss die Tourenzahl des Antriebes bzw. die Schwingfrequenz der Messerbalken gegenseitig genau abgestimmt sein. Auch bei entsprechender Einstellung bzw. Abstimmung dieses Systemes ergibt sich eine relativ geringere Standzeit der Messer als bei den eingangs beschriebener Mähapparaten. Durch unscharfe Schneidkanten der Messer wird das Mähgut in Fahrtrichtung der Mähvorrichtung nach vorne gedrückt, weiters niedergedrückt und .schliesslich überfahren. Die letztbeschriebenen Mähvorrichtungen sind im allgemeinen sehr aufwendig, teuer in ihrer Herstellung, erfordern ein häufiges Nachschleifen sowie ein ständiges Richten und sind nach mehrmaligem Schärfen durch Aenderung ihrer Form zu schnell stumpf. Ungünstig ist ausserdem, dass mit solchen Mähvorrichtungen nicht hangabwärts geschnitten werden kann. Zusammenfassend hat sich das letztbeschriebene System allgemein nicht bewährt und dadurch nicht durchgesetzt, und konnte deshalb Systeme mit Messerbalken der eingangs genannten Art nicht verdrängen.

Um die oszillierende Schneidbewegung durch eine umlaufende bzw. rotierende Mähbewegung zu ersetzen, sind mehrere Mähwerke bzw. Kreiselmäher in Gebrauch genommen worden. Bei solchen Kreiselmähern geben die am Umfang ihrer Scheiben verschwenkbar angeordneten Schlagmesser durch Aufschlagen an einem Fremdkörper nach und sind deshalb gegenüber Fremdkörperrückwirkung relativ unempfindlich. Erst nach mehreren solchen Einwirkungen werden die Schlagmesser stumpf und deformiert. Der Unterhalt von Kreiselmähern ist deshalb realtiv einfach, weil die Schlagmesser in einfachster Weise ausgewechselt werden können. Gegenüber den bisher bekannten Systemen zeichnen sich die Wirbel bzw. Kreismähwerke ausserdem durch eine relativ grosse Schnittflächenleistung aus.

Der Betrieb von Wirbelmähwerken ist jedoch mit einem sehr grossen Leistungsbedarf verbunden. Deshalb sind als Antriebsmaschinen Traktoren mit 50 PS bzw. der entsprechenden Anzahl an kW und grösseren Leistungen erforderlich, wobei vor dem Schnitteinsatz die mit Schlagmessern versehenen Scheiben bereits eine hohe Tourenzahl erreicht haben müssen. Besonders nachteilig ist bei diesem System beim Betrieb die relativ grosse Unfallhäufigkeit. So ist z.B. in Holland der Einsatz solcher Kreiselmäher in Strassennähe verboten. In der Schweiz sind bereits über 30 durch Wirbelmähwerde verursachte Todesfälle bekannt, sodass auch die Unfallversicherungsgesellschaften an einem sichereren Mähsystem besonders interessiert sind. Als Nebenerscheinung sind bei starkem Maushaufenvorkommen in zu mähenden Feldern insbesondere laut italienischen Tierärzten starke Futterverschmutzungen aufgetreten, wodurch sich bei Tieren Verdauungsstörungen ergaben. Durch die vorgenannten Einwirkungen auf die Schlagmesser müssen diese relativ oft ausgewechselt werden. Nach einem Tageseinsatz muss die Klingenseite ausgewechselt werden. Wenn nämlich die Schlagmesser nicht mehr ausreichend scharf sind, wird die jeweilige Scheibe in Mährichtung nach vorne geneigt, wodurch sich der sogenannte Wellenschnitt mit entsprechendem Mähgut-bzw. Futterverlust ergibt. Durch stumpfe Schlagmesser wird zusätzlich eine Verfransung des Schnittgutes hervorgerufen, mit dem Folgeschaden, dass die Schnittgutenden abfaulen und dadurch der Schnittgutnachwuchs beträchtlich beeinträchtigt wird. Die über Winkelgetriebe angetriebenen Scheiben werden insbesondere wegen der Hebelwirkung der die jeweilige Scheibe in Rotation versetzenden Welle überbeansprucht und dadurch beschädigt.

In Sicht auf die vorbeschriebenen im Einsatz befindlichen Mähvorrichtungen bzw. Mähapparate liegt der Erfindung die Aufgabe zugrunde, eine wesentlich verbesserte Mähvorrichtung zu schaffen, durch deren räumlich und zeitlich miteinanderwirkende Arbeitsmittel nicht nur ein neues körperliches Substrat in Form einer Vorrichtung zu bilden, sondern durch Zusammenwirken von wenigstens zwei an sich bekannten Prinzipien in deren Wechselwirkung ein neues Mähprinzip zu schaffen.

Die vorstehend substanzierte Aufgabe wird durch die Erfindung, wie sie in den Ansprüchen beschrieben ist gemäss der Kennzeichnung des Patentanspruches 1 sowie den Kennzeichnungen der diesem Anspruch nachgeordneten Ansprüche gelöst.

Die durch die Erfindung erreichten Vorteile sind im wesentlichen darin zu sehen, dass die umlaufenden bzw. rotierenden Schneidmesser, die mit einem relativ zu diesem ruhendem Messerbalken zusammenwirken, während einer Umdrehung der Schneidmesser im jeweiligen Feld der Mähvorrichtung mit den Schnittkanten des Messerbalkens unterbrechungslos zusammenwirken, so dass keine Leerlaufbewegung beim Mähvorgang auftritt. Anstatt einer oszillierenden Mähbewegung ergibt sich durch die umlaufenden bzw. rotierenden Schneidmesser im Zusammenwirken mit dem Messerbalken nach der Erfindung ein endloser Schnittverlauf, wie ein solcher in keinem bisher geoffenbarten bzw. im Einsatz befindlichen Mähsystem bekannt ist. Das Mähprinzip gemäss der Erfindung ermöglicht in Sicht auf die Tourenzahl des Vorrichtungsantriebes eine möglichst ökonomische Mähvorrichtungsausführung. Die durch die Erfindung realisierte Prinzipkombination vereinigt in sich die Vorteile des Prinzipes der Scherung, durch die das Schnittgut geschnitten jedoch nicht abgeschlagen und dadurch kein Wachstumsverlust verursacht wird, mit der Prinzip des Fräsens. Dadurch können auch Grobteile, wie z.B. Holz, bis zu einem bestimmten Querschnitt geschnitten werden. Durch den Gegenstand der Erfindung wird bei der Mähbewegung eine Scherenschnittwirkung in Wechselwirkung mit einer Fräswirkung vereinigt.

Bei den bekannten Systemen zeigt sich insbesondere die Tendenz, dass beim Mähvorgang das Mähgut in Bewegungsrichtung der jeweiligen Mähvorrichtung nach vorne gestossen wird. Dies ist besonders bei feinem und niedrigem Mähgutstand besonders ungünstig, weil dieser gegenüber dem bekannten Schnittsystemen keine für diese notwendige und hinreichende Gegenmasse beim Schnittvorgang bildet. Beim neuen System nach der Erfindung wird hingegen durch die Schrägstellung der das Mähgut zuführenden Schneidvorrichtung jenes bereits besser zugeführt. Als weitere Vorteile der Erfindung sind der Stufenschnitt, das Fehlen der Schlagbewegung der sich drehenden Messerscheiben, die Auswechselbarkeit der Messer bzw. Schneidscheiben oder der auf diesen angebrachten Schneidkanten, die einfache Nachstellbarkeit der rotierenden Messerscheiben bzw. Schneidkanten sowie die Möglichkeit des Nachschärfens der Scheiben direkt an der Einrichtung, das Fehlen einer zusätzlichen metallischen Reibung durch zusätzliche Druckwirkung wie bei Systemen mit zwei oszillierenden Messern und die Möglichkeit eines einseitig oder beidseitigen Stufenschnittes zu nennen. Weitere Vorteile der Erfindung werden ausserdem noch im Zuge der Figurenbeschreibung des nachfolgend erläuterten Erfindungsbeispieles aufgezählt.

Im Folgenden wird der Gegenstand der Erfindung anhand eines in den Figuren dargestellten Ausführungsbeispieles mit Varianten näher erläutert, ohne auf diese beschränkt zu sein.

Es zeigen

Figur 1 das zentrale beim Mähvorgang rotierende Arbeitsmittel der Mähvorrichtung nach der Erfindung in Parallelperspektive,

Figur 2 eines der beim Schneidvorgang rotierenden Schneidmesser in Form einer ellipsenförmigen Scheibe im Massstab etwa 1:2 in Draufsicht, wie solche Scheiben nach Figur 1 auf der drehbaren Achse der erfindungsgemässen Mähvorrichtung angeordnet sind,

Figur 3 eine schematische Vorderansicht des Traggerüstes der Mähvorrichtung, in der das in Figur 1 in Parallelperspektive dargestellte zentrale Arbeitsmittel projizierend erscheint, insbesondere die in Figur 2 in Draufsicht dargestellten Messerscheiben als zusammenhängende Zackenlinie erscheinen die in die wellenförmig erscheinende Kontur des schematisch dargestellten Fingerbalkens eingreift,

Figur 4 die Schnittseitenansicht nach dem Schnitt A-A gemäss Figur 3,

Figur 5 eine Schnittansicht B-B gemäss Figur 3,

Figur 6 in Vergrösserung das in Figur 4 im Kreis abgegrenzte Teilstück der gezackten Schneide der in Achs-bzw. Wellenrichtung als Kreis erscheinenden Kontur-Ellipse einer Messerscheibe,

Figur 7 in Draufsicht mehrere schematische Darstellungen des festen Fingerbalkens, bei dem die Spitzen der Messer in die Richtung der Mähbewegung weisen, wobei aus den Darstellungen die Abwicklung der Kurven der Eingriffspunkte zwischen den rotierenden Schneidmessern mit den festen Messern des Balkens entnehmbar sind,

Figur 8 die der Figur 7 zugeordnete Vorderansicht bzw. der Aufriss von vier projizierend erscheinenden Messerscheiben,

Fig. 9 die in die Zeichenebene geklappte Seitenansicht bzw. den Kreuzriss nach der Anordnung nach Figur 8, in dem die rotierenden Schneidmesser bzw. Messerscheiben als Kreis erscheinen, wobei dessen Hauptachse als Durchmesser und die hiezu senkrecht bzw. unter einem rechten Winkel erscheinende Nebenachse in der Projektion gleich lang erscheinen,

Fig. 10 einen Teil der Mähmesser von Fig. 3 im Massstab 1:2,

Fig. 11 eine Variante bzgl. Fig. 10 und

Fig. 12 eine Ergänzung bezüglich der Dreipunktaufhängung nach Fig. 3.

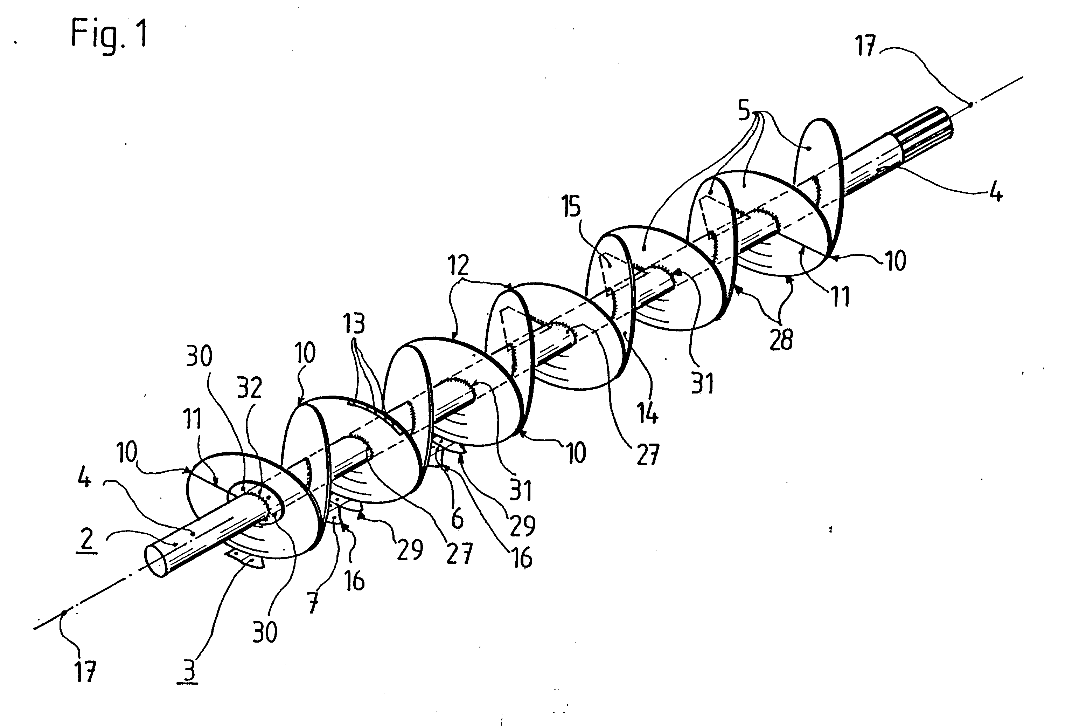

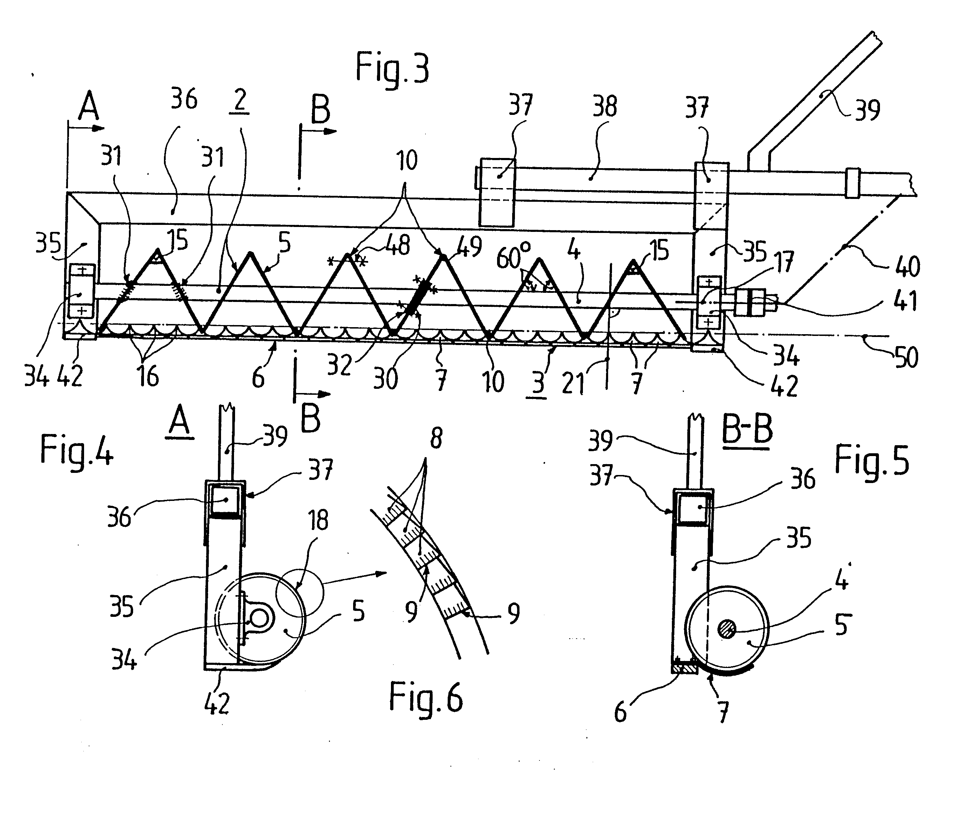

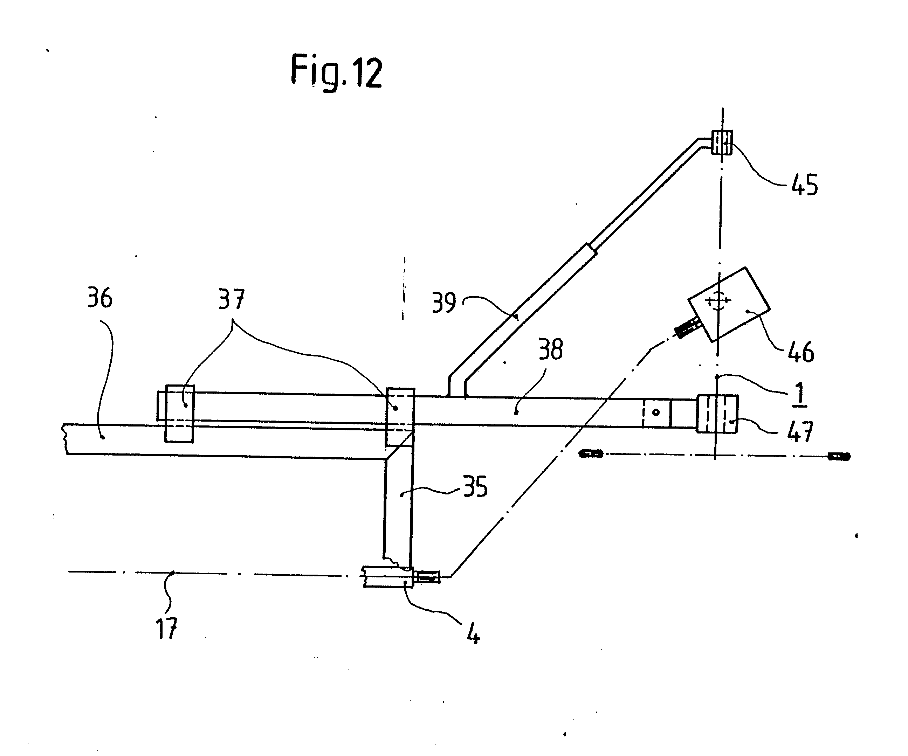

Figur 1 zeigt in Parallelperspektive eine Ausführung eines in einer aus der Figur 1 nicht ersichtlichen Dreipunktaufhängung 1 (siehe Fig. 3 und 12) drehbar gelagerten ersten Arbeitsmittels 2 in Form einer Mähmesserwalze 2, die mit einem zweiten Arbeitsmittel 3 in Form eines Mähmesserbalkens 3 zusammenarbeitet.

In Figur 1 ist die Mähmesserwalze mit 2, der Mähmesserbalken mit 3, die Welle mit 4, die scheibenförmigen Mähmesser mit 5, ein Träger mit 6, die am Träger 6 befestigten fingerförmigen Mähmesser mit 7, die Verbindungsstellen benachbarter scheibenförmiger Mähmesser 5 mit 10, die grössten zu den Stellen 10 reichenden radialen Erstreckungen der Mähmesser 5 mit 11, der jeweils periphere Teil des jeweiligen Messers 5 mit 12, die Segmentteile an 12 mit 13, die Scheibenrandzonen der Messer 5 mit 14, die Förderbleche zwischen jeweils angrenzenden Messern 5 im Bereich deren jeweiliger Verbindungsstelle 10 und der Welle 4 mit 15, die Spitzen der fingerförmigen Mähmesser 7 mit 16, die Achse der Welle 4 mit 17, die Stellen, an denen das jeweilige scheibenförmige Mähmesser 5 mit der Welle 4 verbunden ist, mit 27, die schneidenden Kanten bzw. Flächen der Messer 5 mit 28 und der Messer 7 mit 29 bezeichnet.

Die schneidenden Kanten bzw. Flächen 28 bzw. 29 der scheibenförmigen bzw. der fingerförmigen Mähmesser 5 bzw. 8 weisen quer zur Rotationsrichtung der Mähmesser 5 eine Riffelung oder Zackung oder Zahnung auf. Dadurch ergibt bei der Scherung des Mähgutes die Wirkung, dass die Mähmesser 5,7 bei deren Schliessen bzw. beim Schneiden des Mähgutes dieses nicht in fortschreitender Richtung der sich schliessenden Messer wegdrängen und gleichzeitig durch eine parallele Komponente zur Richtung der Achse 4 erfolgende Dilatation der Eingriffspunkte der radial umlaufenden Messer 5 mit den relativ zu diesen feststehenden Messern 7 im Zusammenwirken mit dem Zusammenfassen des Mähgutes durch diese Messer 7, dass das Mähgut nicht nur abgeschert, sondern gleichzeitig auch vor allem abgefräst wird. Die scheibenförmigen Mähmesser 5 sind alternierend unter einem spitzen Winkel gleicher Grösse gegen die Welle 4 bzw. deren Achse 7 geneigt und benachbarte einander zugeneigte Messer 5 an den peripheren Enden gleich grosser maximaler radialer Erstreckung, also an den Verbindungsstellen 10 durch Verschraubung (30) oder Verschweissung (31) miteinander verbunden. Von der Welle 4 lösbare Messer 5 sind mit dieser vorzugsweise mittels wenigstens eines Ringes 32 durch eine mehrfache Verschraubung 30 verbunden.

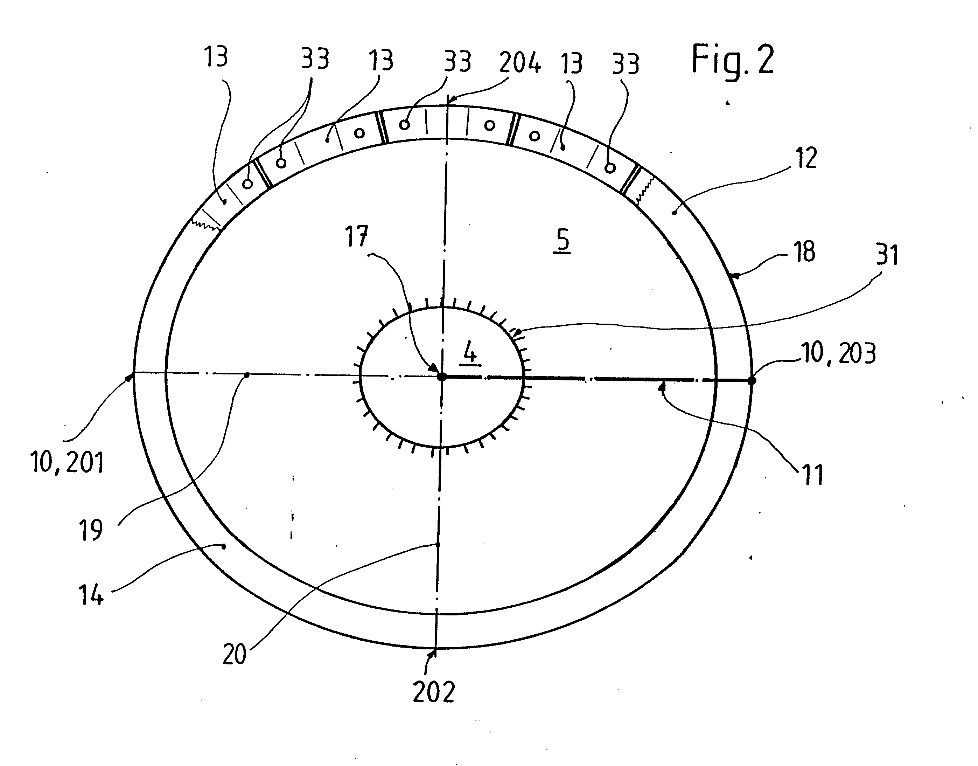

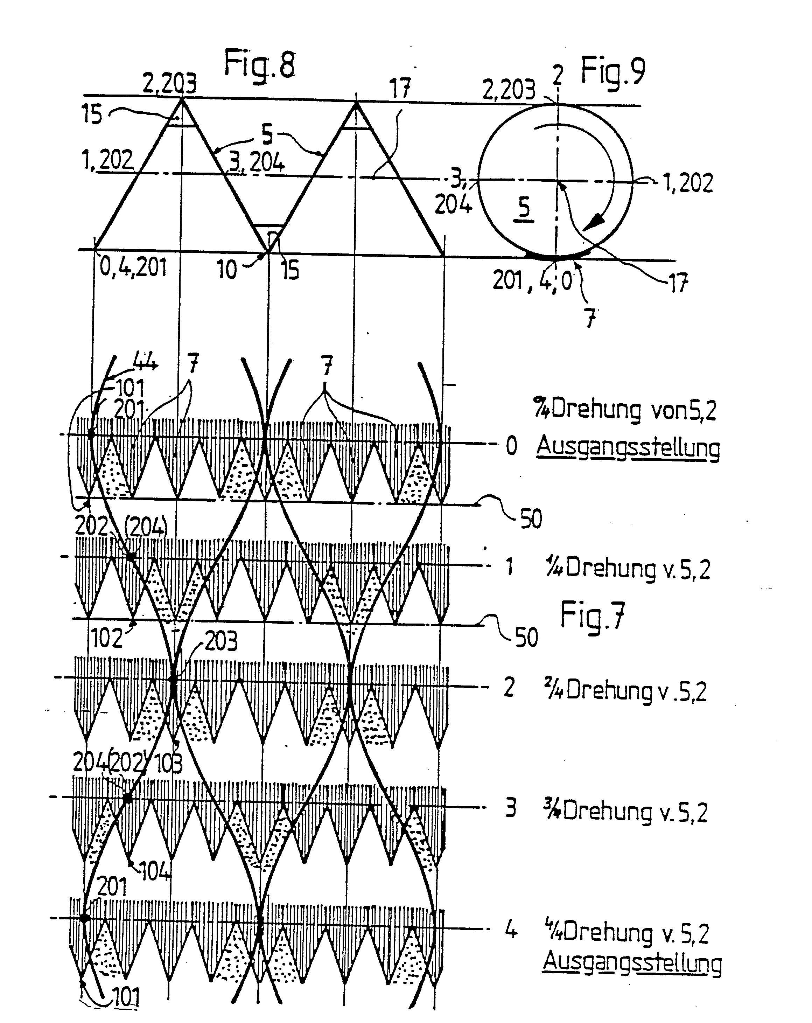

Figur 2 zeigt die Draufsicht auf ein scheibenförmiges Mähmesser 5 mit ellipsenförmigen Rand 18 im Massstab 1:2, wie solche Messer 5 in Figur 1 abgebildet sind. In Figur 2 sind die den Positionen der Figur 1 entsprechenden Positionen gleich wie in Figur 1 bezeichnet. Die Ellipsenhauptachse von 5 ist mit 19 und die mit dieser einen rechten Winkel einschliessende Ellipsennebenachse ist mit 20 benannt. Bei mit der Welle 4 durch Verschweissung 31 verbundenem Messer 5 sind die Segmentteile 13 auf die Scheibenrandzone 14 aufgesetzt und mittels Schrauben 33 mit 14 lösbar fest verbunden, so dass der ellipsenförmige Rand 18 in Teilen demontiert und nachbearbeitet werden kann. Die derart bewegliche Schneidkante kann auch mittels weniger Segmentteile 13, z.B. mittels vier Segmentringteile, realisiert bzw. wahlweise eingefräst sein. Die im Querschnitt kreisflächige Welle 4 kann im Querprofil auch mehrkantig bzw. der Form nach als Mitnehmer ausgebildet sein. In Sicht auf die Erläuterungen im Zusammenhang mit den schematischen Figuren 7, 8 und 9 sind die Scheitelpunkte der Ellipsen-Haupt und Nebenachse mit 201, 202, 203 und 204 bezeichnet.

In Figur 3 ist eine schematische Ansicht entgegen der Richtung dargestellt, in die sich die in Arbeitslage befindliche Vorrichtung beim Mähen bewegt. Die den in den vorhergehenden Figuren dargestellten Positionen entsprechenden Positionen der Figur 3 sind wieder gleich wie in den vorhergehenden Figuren bezeichnet. Ausserdem sind die Stehlager der Welle 4 mit 34, die Lagerplatten mit 35, der Hauptträger mit 36, die Haltebügel mit 37, der eine Führung tragende Arm mit 39, die Gelenkwelle mit 40, die Kupplung der Welle 4 mit der Gelenkwelle 40 mit 41 bezeichnet. Durch die projizierend erscheinenden scheibenförmigen Mähmesser 5 der Mähmesserwalze 2 mit ihren in tiefster Lage befindlichen Verbindungsstellen 10 ist zwischen zwei benachbarten Stellen 10 eine fünf Spitzen 16 umfassende Teilung der fünf zugehörenden fingerförmigen Mähmessern 5 festgelegt. Die Spitzen 16 erscheinen etwas höher als die Stellen 10 gelegen, weil entsprechend der in Figur 9 im Kreuzriss ersichtlichen Lage die Spitzen 16 der Messer 7 höher als die Verbindungsstellen 10 gelegen sind.

Die auf die Welle 4 bzw. die Achse 17 normal stehende Symmetrieebene durch die jeweilige Spitze 16 des jeweiligen fingerförmigen Mähmessers 7 ist mit 21 benannt. Die Verschraubung der Messer 5 ist mit 48, deren Verschweissung mit 49 bezeichnet. Die Parallele zu 17, auf der die Spitzen 16 von 7 liegen, hat die Position 50.

Figur 4 zeigt die Schnittseitenansicht gemäss Schnitt A-A. Aus dieser ist der eine Führungsschuh 42 der Vorrichtung ersichtlich, der wenigstens teilweise als Mähmesser 7 dienen kann.

Aus Figur 5 ist die Seitenansicht des Schnittes B-B entnehmbar, dessen Positionen aus den vorbeschriebenen Figuren bekannt sind.

Figur 6 zeigt das in Figur 4 im Kreis abgegrenzte Teilstück der gezackten Schneide des in Achsrichtung als Kreis erscheinenden ellipsenförmigen Randes 18 des scheibenförmigen Mähmessers 5 in Vergrösserung. Die in Anspruch 3 beschriebene Zahnung 8 der Schneide 9 des Messers 5 ergibt eine weitere Verbesserung des Scher-und Fräsvorganges beim Mähen.

Die Figuren 7, 8 und 9 zeigen eine in der vorangehenden Figurenaufzählung geraffte Beschreibung der Figurenzusammenstellung.

Figur 9 vorwegnehmend sind in dieser deren mit 0, 1, 2, 3 und 4 bezeichneten Scheitelpunkte der Ellipsen-Haupt-und -Nebenachsen in Konkordanz mit Figur 2 mit 201 = 0, 202 = 1, 203 = 2 und 204 = 3 und schliesslich 201 = 4 mit 0 bezeichnet.

Durch eine 1/4 =, 1/2 =, 3/4 = und ganze Umdrehung in die durch den Pfeil 43 angegebene Drehrichtung gelangen die Scheitel 201, 202, 203 und 204 in die im Kreuzriss tiefste mit 0 bzw. 4 bezeichnete Lage. Für die in Figur 9 gezeigte Ausgangsstellung des Messers 5 sind in dem in Figur 8 im Aufriss projizierend erscheinenden Messer 5 die Scheitel gleich wie in Figur 9 benannt.

Nach Figur 7 ergibt sich in der des bzw. der Messer 5 nach einer 1/4 =, 1/2 =, 3/4 und vollen Umdrehung die in den Teilfiguren 1, 2, 3 und 4 jeweils tiefste Lage bzw. Konfiguration der Kreuzungspunkte zwischen dem bzw. den Messern 5 und den durch dieses gekreuzten Messern 7. Die einzelnen Konfigurationen 0 bis 4 sind im Patentanspruch 11 genau beschrieben. Mit 44 ist die sinusförmige Linie der Kreuzungs-bzw. Schnittpunkte bzw. jeweiliegen Momentanzentren entsprechend Anspruch 15 beschrieben.

In Figur 3 kommen die Stellen 10 mit den nächstgelegenen bzw. im Anspruch 11 genannten Spitzen 16 bzw. 101, 102, 103 und 104 in Koinzidenz, wenn die Ausgangsstellung 0 in Figur 9 durch Drehung in Koinzidenz mit der bzw. den Spitzen 17 gebracht wird, wodurch Figur 7 der Beschreibung nach Anspruch 15 entspricht. Aus der Abwicklung nach den Figuren 8 und 9 ist in Figur 7 mittels Punkten auch die Lage des Mähgutes beim Mähvorgang angedeutet.

Die Figur 7 gibt keine formgerechte Projektion der Teile im Grundriss wieder. Der Schnittvorgang ist in Figur 7 nur punktweise angedeutet. Beim Lesen der Figur 7 ist zu beachten, dass bei Koinzidenz der Spitze 101 z.B. mit dem Scheitel 201 je nach Drehrichtung, Neigungswinkel der Messer 5 sowie der Fingerränder 22 von 7 im Verlauf der ersten Vierteldrehung die in Figur 7 ganz eingezeichnete Fingerrand 22 des Messers 7 fortlaufend Kreuzungspunkt für Kreuzungspunkt beim Mähgutschneiden gekreuzt wird, nach dieser Viertelumdrehung der Scheitel 204 oder 202 mit der Spitze 102 in Konkordanz gelangt und im Verlauf der zweiten Viertelumdrehung mit dem Fingerrand 22 des benachbarten Messers stetig gekreuzt wird, usw., wobei in Figur 7 wegen der Abwicklung z.B. der Punkt 101 der Spitze nicht identisch mit dem Punkt 201 des Scheitelpunktes erscheint, usw..

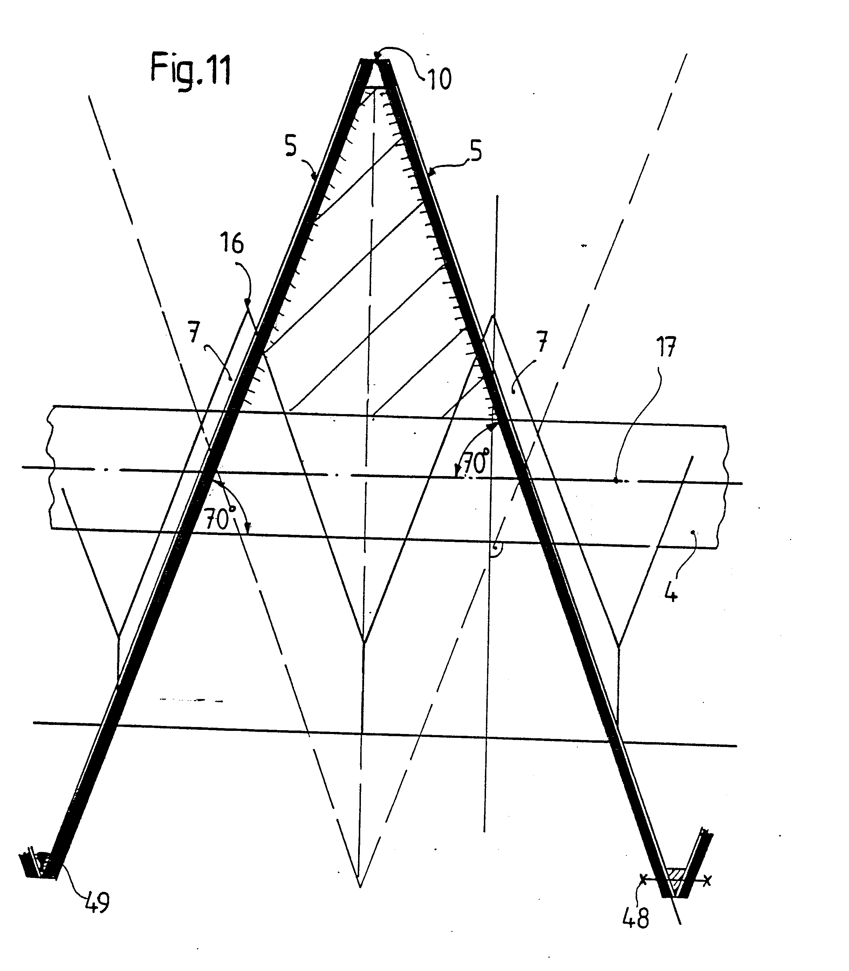

Nach Erreichen der Spitze 103 bzw. Zusammenwirken mit dessen Mähmesser 7 tritt in Achsrichtung gesehen eine Umkehr des Mähvorganges ein, bis wieder die Spitze 101 vom Scheitel 201 erreicht ist. Bei einer Teilung gemäss Erfindungsvariante nach Figur 11 ist der vorbeschriebene Vorgang bereits auf jedes Messer 7 für sich beschränkt, erfolgt die hin-und her-Bewegung bereits über die maximale Breite jedes Messers 7. Für den Mähvorgang mitentscheidend ist weiters die Drahzahl der Messerwalze 2.

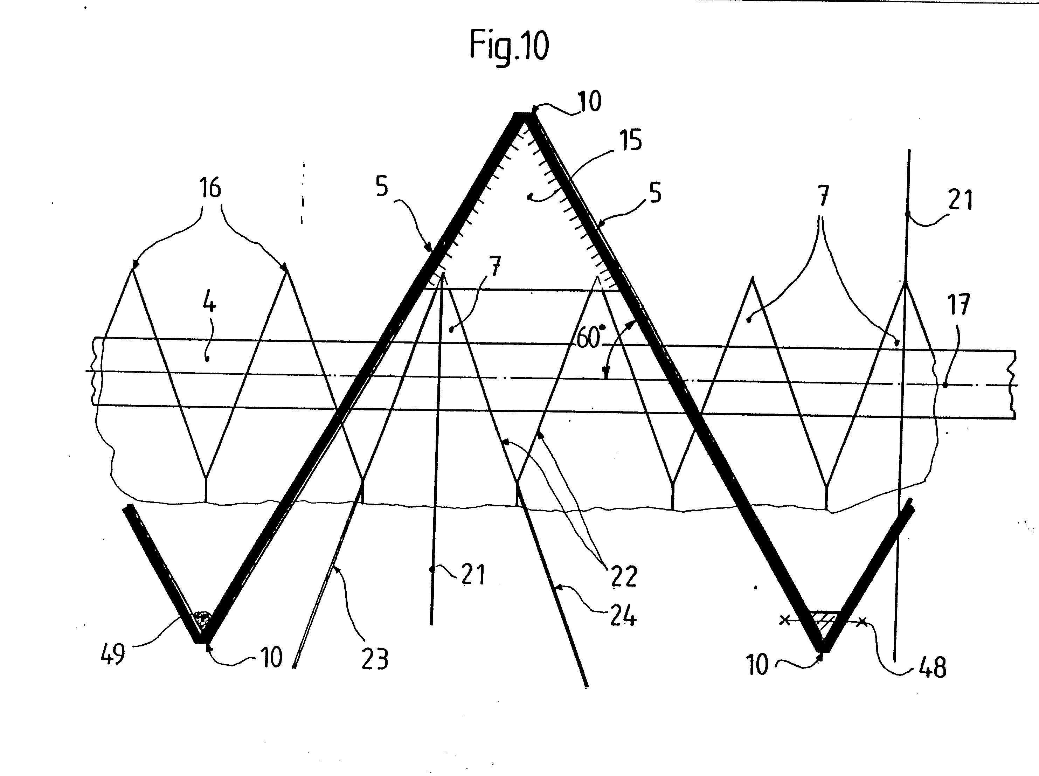

In Figur 10 ist ein Ausschnitt der Mähmesser nach Figur 3 im Massstab 1:2 und
in Figur 11 eine Variante bzgl. Figur 10 mit einem Neigungswinkel von etwa 70 Winkelgraden und steileren Messerflanken der Messer 7 in Massstab 1:1 dargestellt.

Figur 12 ergänzt die Figur 3. In jener ist die Führung am freien Ende des Armes 39 mit 45, ein Winkelgetriebe mit 46 und eine weitere Führung am freien Kragarmende mit 47 bezeichnet, wobei auf weitere Details der Dreipunktaufhängung 1 nicht eingegangen worden ist.

Durch die Erfindung ist ein leerlauffreier Mähvorgang gewährleistet. Bei der primär beschriebenen Ausführung der Erfindung mit einer 300 mm langen Hauptachse des jeweiligen ellipsenförmigen Mähmessers ergibt sich eine optimale Teilung von Spitze zu Spitze der fingerförmigen Mähmesser von 75 mm. Je kleiner die Teilung ist, um so geringer wird der Widerstand beim Mähen. Die fräsende Wirkung der Vorrichtung ist sehr beträchtlich, sodass auch Fremdkörper nicht eingeklemmt werden.

Die Mähvorrichtung ist im Front-und Seiteneinsatz verwendbar. Sie weist ein erheblich geringeres Gewicht von ca. 200 kg als beispielsweise die kleinste Ausführung eines Kreiselmähers mit ca. 410 kg auf, so dass sich als weitere Vorteile ein geringerer Energiebedarf und ein kleinerer Bodendruck durch die Vorrichtung nach der Erfindung ergeben. Jene kann auch mit einem Quetschzetter integriert zum Strohschneiden und für die Abfallverwertung eingesetzt werden. Die scheibenförmigen Mähmesser können etwa bei einer Geschwindigkeit der Vorrichtung von 15 km/Std. mit ca. 800 Umdrehungen pro Minute betrieben werden.

**Ansprüche**

1. Mähvorrichtung, gekennzeichnet durch wenigstens zwei in einer räumlich verstellbaren Dreipunktaufhängung (1) angeordnete, beim Mähen räumlich und zeitlich unterbrechungslos zusammenarbeitende Arbeitsmittel (2,3), einem ersten (2), das aus mindestens einer in der Aufhängung (1) drehbar gelagerten Welle (4) und an dieser (4) befindlichen sowie gegen diese (4) als auch gegeneinander alternierend gleich geneigten, an den von der Welle (4) am weitesten abstehenden Stellen (10) paarweise miteinander verbundenen, in zusammenhängender Anordnung an der Welle (4) befestigten, scheibenförmigen Mähmessern (5) besteht, welche Teile (4,5) insgesamt das erste Arbeitsmittel (2) in Form einer Mähmesserwalze (2) bilden, das (2) zusammen mit wenigstens einem das jeweilige Mähgut scharenden und gleichzeitig fräsenden Mähmesserbalken (3) als zweiten Arbeitsmittel (3) zusammenwirkt, das (3) aus mindestens einem mit der Dreipunktaufhängung (1) fest verbundenen Träger (6) mit daran nebeneinander befestigten, fingerförmigen Mähmessern (7) besteht. (Fig.1).

2. Mähvorrichtung nach Anspruch 1, dadurch gekennzeichnet, dass die schneidenenden Kanten bzw. Flächen (28, 29) der scheibenförmigen (5) und der fingerförmigen (7) Mähmesser quer zur Rotationsrichtung der scheibenförmigen Mähmesser (5) geriffelt bzw. gezackt bzw. gezahnt sind. (Fig. 6)

3. Mähvorrichtung nach Anspruch 2, dadurch gekennzeichnet, dass die einen gezackten Rand bildende Zahnung der scheibenförmigen Mähmesser (5) am jeweiligen Zahn (8) eine quer zur Rotationsrichtung in diese weisende Schneide (9) aufweisen. (Fig. 6)

4. Mähvorrichtung nach Anspruch 1, dadurch gekennzeichnet, dass die auf der Welle (4) fest angeordneten scheibenförmigen Mähmesser (5) unter je einem spitzen Winkel gleicher Grösse gegen die Welle (4) und zueinander geneigt und paarweise an den Stellen (10) grösster gleicher radialer Erstreckung (11) der Mähmesser (5) miteinander durch Verschraubung (48) oder Verschweissung (49) lösbar oder unlösbar verbunden sind. (Fig. 3,10,11)

5. Mähvorrichtung nach Anspruch 1 oder 4, dadurch gekennzeichnet, dass die Mähmesser (5) durch Verschraubung (30) oder Verschweissung (31) mit der Welle (4) lösbar oder unlösbar verbunden sind. (Fig. 1,2,3)

6. Mähvorrichtung nach den Ansprüchen 2, 4 und 5, dadurch gekennzeichnet, dass bei fix auf der Welle (4) und miteinander verbundenen scheibenförmigen Mähmessern (5) und von diesen separaten schneidenden Kanten bzw. Flächen mittels dieser tragenden Segmentteilen (13) jeweils an dem peripheren Teil (12) der scheibenförmigen Mähmesser (5) mittels Schraubung (33) austauschbar angeordnet sind. (Fig. 2)

7. Mähvorrichtung nach Anspruch 1, dadurch gekennzeichnet, dass die scheibenförmigen Mähmesser (5) im allgemeinen als ellipsenflächige, im Grenzfall kreisflächige, flache oder bombierte Scheiben mit jeweils an der Scheibenrandzone (14) schneidender Kante bzw. Fläche ausgebildet sind. (Fig. 1,2,10,11)

8. Mähvorrichtung nach Anspruch 1 oder 6, dadurch gekennzeichnet, dass jeweils im Bereich der Verbindungsstelle (10) zwischen den aneinandergrenzenden scheibenförmigen Mähmessern (5) und der Welle (4) je ein zum Mähgut hin konkaves Förderblech (15) angeordnet ist. (Fig. 1,3,9,10,11)

9. Mähvorrichtung nach Anspruch 1, dadurch gekennzeichnet, dass die scheibenförmigen Mähmesser (5), die kontinuierlich zusammenhängend im wesentlichen eine Mähmesserwalze (2) bilden, relativ bezüglich der fingerförmigen Mähmesser (7), die im wesentlichen einen Mähmesserbalken (3) bilden, derart angeordnet sind, dass die schneidenden Kanten bzw. Flächen der rotierenden Messerwalze (2) stets unter einem von Null Winkelgraden verschiedenen Winkel die schneidenden Kanten bzw. Flächen der fingerförmigen Mähmesser (7) des relativ zur Mähmesserwalze (2) ruhenden Mähmesserbalkens (3) kreuzen. (Fig. 7,10,11)

10. Mähvorrichtung nach Anspruch 1, dadurch gekennzeichnet, dass die Spitzen (16) der nebeneinander angeordneten fingerförmigen Mähmesser (7) sich in gleichen Abständen auf einer Parallelen zur Axe (17) der Welle (4) befinden. (Fig. 3,7)

11. Mähvorrichtung nach Anspruch 1 oder 10, dadurch gekennzeichnet, dass bei ellipsenflächigen, scheibenförmigen Mähmessern (5) mit ellipsenförmigem Rand (18) z.B. ausgehend von einer Koinzidenz einer Spitze (101) eines ersten fingerförmigen Mähmessers (7) mit dem einen Scheitelpunkt (201) der Ellipsenhauptachse (19) eines Mähmessers (5) mit ellipsenförmigem Rand (18) nach einer Viertelumdrehung der Welle (4) (90 Winkelgraden) einer der beiden dem Punkt (201) benachbarten Scheitelpunkte (202) der Ellipsennebenachse (20) mit der Spitze (102) eines der beiden dem ersten Mähmesser (7) benachbarten Mähmessers (7) in Koinzidenz gelangt, dass nach einer weiteren Viertelumdrehung bzw. insgesamt halben Umdrehung der Welle (4) der andere Scheitelpunkt (203) der Ellipsenhauptachse (19) mit der Spitze (103) des an das benachbarte Mähmesser 7 angrenzenden Mähmessers koinzidiert, und dass einer weiteren Vierteilumdrehung der Welle (4) der andere Scheitelpunkt (204) der Ellipsennebenachse (20) mit der Spitze (104) identisch ist, mit der Spitze (102) in Koinzidenz gelangt und nach einer insgesamt vollen Umdrehung der Welle (4) die koinzidierende Ausgangslage der Spitze (101) mit dem einem Scheitelpunkt (201) wieder erreicht ist. (Fig. 7)

12. Mähvorrichtung nach Anspruch 1, dadurch gekennzeichnet, dass das jeweilige fingerförmige Mähmesser (7) bezüglich der durch dessen Spitze (16) normal auf die Welle (4) stehende Ebene (21) symmetrisch ausgebildet ist. (Fig. 3,10,11)

13. Mähvorrichtung nach Anspruch 1 und 11, dadurch gekennzeichnet, dass die schneidenden Kanten bzw. Flächen der von der jeweiligen Spitze (16) des fingerförmigen Mähmessers (7) ausgehenden Fingerränder (21) in zwei unter spitzen, gleich grossen Winkel symmetrisch bezüglich der Symmetrieebene (21) angeordneten Ebenen (23,24) liegen, die sich in einer durch die jeweilige Spitze (16) gehende und der Symmetrieebene (21) angehörende Gerade schneiden. (Fig. 10)

14. Mähvorrichtung nach Anspruch 12, dadurch gekennzeichnet, dass die Winkelsummer der Ebenen (23,24), die den Verlauf der beiden Fingerränder (22) der jeweiligen Spitze (16) des jeweiligen fingerförmigen Mähmessers (7) bestimmen, weniger als 90 Grad beträgt. (Fig. 10,11)

15. Mähvorrichtung nach Anspruch 1 und 4, dadurch gekennzeichnet, dass die gleiche bzw. als Scheitelwinkel zwischen der Achse (17) der Welle (4) und den beiden parallelen Ebenen des jeweiligen scheibenförmigen Mähmessers (5) wählbare Neigung weniger als 90 Winkelgrade, z.B. 60 oder 70 Grade beträgt. (Fig. 3,9,10,11)

16. Mähvorrichtung nach Anspruch 1 und 14, dadurch gekennzeichnet, dass die schneidende Kante bzw. der jeweilige Fingerrand (22) des jeweiligen fingerförmigen Messers (7) die Form einer stetigen Punktkurve aufweist, deren Punkte den jeweiligen Momentanzentren zwischen dem Fingerrand (22) als Rastpolbahn (25) und der jeweiligen Momentanstellung des ellipsenförmigen Randes (18) des scheibenförmigen Mähmessers (5) als Gangpolbahn (26) entsprechen.

17. Mähvorrichtung nach Anspruch 3 und 15, dadurch gekennzeichnet, dass der Schneidevorgang zwischen den Polbahnen (25) und (26) der sich kreuzenden schneidenden Kanten bzw. Flächen einer Schrotung zwischen den Polbahnen, d.h. einem Scheren und einem gleichzeitigen hiezu durch die in Richtung der Achse (17) der Welle (4) erfolgenden Dilatation des jeweiligen Momentanzentrums wirksamen Fräsen entspricht, das durch die gezahnte Ausbildung der Mähmesser (5) wirkungsmässig noch verstärkt ist.

Fig. 1

0 238 827

Fig. 2

# Fig.3

A | 36 | 2 | B

31 | 31 | | 10 | 37 | 38 | 37 | 39

35 | 15 | 5 | 48 | 49 | 60° | 4 | 15 | 35 | 17 | 40

41

34 42 | 16 | 6 | 32 | 30 | 7 | 10 | 3 | 21 | 7 | 34 | 42 | 50

A | B

## Fig.4

39 | 37

36

35

34

42

## Fig.6

8

9 | 9

## B-B

39 | 37 | 36 | Fig.5

35

4

5

6 | 7

0 238 827

0 238 827

Fig.8    Fig.9

Fig.7

¾ Drehung von 5,2

0  Ausgangsstellung

¼ Drehung v. 5,2

²⁄₄ Drehung v. 5,2

¾ Drehung v. 5,2

⁴⁄₄ Drehung v. 5,2
Ausgangsstellung

Fig.10

Fig.11

# Fig.12

36  37  39  38  45  46  1  47  35  17  4

0 238 827

## EINSCHLÄGIGE DOKUMENTE

EP 87101919.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US - A - 2 790 293 (J.V. CROTTY) <br> * Anspruch 1; Fig. 1,3,7 * | 1 | A 01 D 34/44 <br> A 01 D 34/42 |
| A | * Ansprüche 2-7; Fig. 3,8 * | 2-5,7-10,12 | |
| A | US - A - 2 772 533 (H.B. SHIBLEY) <br> * Anspruch 1; Fig. 1,2 * | 1-12 | |
| A | DE - A1 - 2 816 967 (VEJUX, MICHEL) <br> * Ansprüche 1,2; Fig. 2 * | 1 | |
| A | FR - A - 2 219 745 (VEJUX, MICHEL) <br> * Fig. 1,9,19 * | 1 | |
| A | US - A - 4 267 690 (C.A. PIKE) <br> * Fig. 1 * | 1 | RECHERCHIERTE SACHGEBIETE (Int. Cl. 4) <br><br> A 01 D 34/00 |
| A | US - A - 2 640 309 (M.K. BENSON) | | |

Der vorliegende Recherchenbericht wurde für alle Patentansprüche erstellt.

| Recherchenort | Abschlußdatum der Recherche | Prüfer |
|---|---|---|
| WIEN | 15-07-1987 | MENTLER |